# EUROPÄISCHE PATENTSCHRIFT

(11) **EP 0 700 611 B1**
(45) Veröffentlichungstag und Bekanntmachung des Hinweises auf die Patenterteilung: **15.12.1999**
(21) Anmeldenummer: 94915028.8
(22) Anmeldetag: 06.05.1994
(51) Int. Cl.: H04J 3/14, H04L 7/04

(54) **VERFAHREN ZUM GEWINNEN EINES EINEN AUSFALL DER SYNCHRONISATION ZWISCHEN EINER PSEUDOZUFALLSSIGNALFOLGE EINES SENDERS UND EINER REFERENZ-PSEUDOZUFALLSSIGNALFOLGE EINES EMPFÄNGERS ANZEIGENDEN SIGNALS**
PROCESS FOR OBTAINING A SIGNAL INDICATING A SYNCHRONISATION ERROR BETWEEN A PSEUDO-RANDOM SIGNAL SEQUENCE FROM A TRANSMITTER AND A REFERENCE PSEUDO-RANDOM SIGNAL SEQUENCE FROM A RECEIVER
PROCEDE PERMETTANT D'OBTENIR UN SIGNAL INDIQUANT UNE ERREUR DE SYNCHRONISATION ENTRE UNE SEQUENCE DE SIGNAUX PSEUDO-ALEATOIRES D'UN EMETTEUR ET UNE SEQUENCE DE SIGNAUX PSEUDO-ALEATOIRES DE REFERENCE D'UN RECEPTEUR

(30) Priorität: 28.05.1993 DE 4318368
(43) Veröffentlichungstag der Anmeldung: 13.03.1996
(73) Patentinhaber: TEKTRONIX, INC., Wilsonville, Oregon 97070-1000 (US)
(72) Erfinder: WOLF, Andreas, D-12157 Berlin (DE); ARWEILER, Hans-Werner, D-12161 Berlin (DE)
(74) Vertreter: Hofstetter, Alfons J., Dr.rer.nat.
(86) Internationale Anmeldenummer: DE9400553
(87) Internationale Veröffentlichungsnummer: WO9428652

(56) Entgegenhaltungen:
- DE-A- 2 359 716
- DE-A- 4 107 640
- US-A- 5 199 050

## Beschreibung

Die Erfindung bezieht sich auf ein Verfahren zum Gewinnen eines einen Ausfall der Synchronisation zwischen einer Pseudozufallsignalfolge eines Senders und einer Referenz-Pseudozufallsignalfolge eines Empfängers anzeigenden Signals mittels einer empfangerseitigen Meßeinrichtung.

Bei einem bekannten Verfahren dieser Art (DE 23 59 716 C3) ist die Meßeinrichtung als Bitfehler-Meßeinrichtung ausgebildet, weil mit ihr ein bitweiser Vergleich einer über eine Meßstrecke übertragenen Pseudozufallssignalfolge mit einer empfangsseitig erzeugten Referenz-Pseudozufallssignalfolge durchgeführt wird. Aus dem bitweisen Vergleich der beiden Pseudozufallssignalfolgen wird eine Fehlersignalfolge gebildet, die in einer Schaltungsanordnung daraufhin untersucht wird, ob sie mit der Pseudozufallssignalfolge übereinstimmt. Bei Übereinstimmung wird auf einen Ausfall der Synchronisation geschlossen, wenn gleichzeitig Bitfehler am Ausgang der Bitfehler-Meßeinrichtung angezeigt werden.

Ferner ist es aus der EP 0 408 936 A2 bekannt, zum Auffinden eines Zeichenmusters in einem Datenstrom ein Verfahren zu benutzen, bei dem die im Datenstrom auftretende Bitfolge dadurch mit einem gesuchten Bitmuster verglichen wird, daß bei Übereinstimmung der Bits in beiden Mustern eine entsprechende Kennung in einem Schieberegister solange von Stufe zu Stufe weitergegeben wird, solange eine ununterbrochene Übereinstimmung der ankommenden Bits mit den entsprechenden Bits des gesuchten Bitmusters vorliegt. Die Weitergabe der sog. Kennung im Schieberegister wird dann unterbrochen, wenn bei einem einzelnen Bit die Übereinstimmung nicht gegeben ist. Tritt an der letzten oder einer anderen vorgegebenen Stufe des Schieberegisters die Kennung auf, so ist dies ein Zeichen dafür, daß eine Übereinstimmung zwischen den Bits im Datenstrom mit denen im gesuchten Bitmuster gegeben ist. Andernfalls wird dies als Ausfall der Synchronisation gewertet.

Das eingangs beschriebene, bekannte Verfahren ist zwar insofern vorteilhaft, als es mit Sicherheit ein Unterscheiden sog. Bündelfehler vom Ausfall der Synchronisation zwischen Sender und Empfänger ermöglicht und auch im Vergleich zu älteren bekannten Verfahren relativ schnell arbeitet, jedoch bedarf das bekannte Verfahren in zeitlicher Hinsicht immer noch mindestens der Auswertung einer Länge der Pseudozufallssignalfolge, um den Ausfall der Synchronisation festzustellen, wodurch eine Wiederherstellung des Synchronzustandes nur mit einem gewissen Zeitaufwand möglich ist. Diese ganze Zeit geht der Überwachungszeit für die Qualität einer digitalen Signalübertragungsstrecke verloren und reduziert die Qualität der Meßergebnisse.

Der Erfindung liegt daher die Aufgabe zugrunde, das bekannte Verfahren so zu verbessern, daß ein Ausfall der Synchronisation zwischen einer Pseudozufallssignalfolge eines Senders und einer Referenz-Pseudozufallssignalfolge eines Empfängers noch schneller erfaßt werden kann, so daß auch der Synchronzustand verhältnismäßig rasch wieder hergestellt werden kann.

Zur Lösung dieser Aufgabe werden bei einem Verfahren der eingangs angegebenen Art erfindungsgemäß aufeinanderfolgende Abschnitte der Referenz-Pseudozufallssignalfolge jeweils für sich nacheinander mit der empfangenen Pseudozufallssignalfolge unter Gewinnen partieller Kreuzkorrelationsfunktionen kreuzkorreliert und die partiellen Kreuzkorrelationsfunktionen unter Erzeugen einer Summen-Kreuzkorrelationsfunktion addiert; die Maxima der Summen-Kreuzkorrelationsfunktion werden erfaßt und auf ihr zeitliches Auftreten überwacht, und beim nicht zeitgerechten Auftreten mindestens dreier Maxima in der Summen-Kreuzkorrelationsfunktion wird das den Ausfall der Synchronisation anzeigende Signal erzeugt.

Ein wesentlicher Vorteil des erfindungsgemäßen Verfahrens besteht darin, daß ein Ausfall der Synchronisation verhältnismäßig schnell erfaßt werden kann, so daß dann anschließend die aus der oben erwähnten Druckschrift an sich bekannten Maßnahmen zur Synchronisierung zwischen Sender und Empfänger eingeleitet werden können. Dabei ist die Zeit zum Ermitteln des Auftretens eines Synchronisationsausfalls bei dem erfindungsgemäßen Verfahren dadurch bestimmt, wieviele partielle Kreuzkorrelationsfunktionen zur Bildung der Summen-Kreuzkorrelationsfunktion herangezogen werden. Je mehr partielle Kreuzkorrelationsfunktionen erzeugt werden, umso schneller ist der Ausfall der Synchronisation feststellbar. Dabei ist das erfindungsgemäße Verfahren in keiner Weise mehr abhängig davon, wie lang die jeweilige Pseudozufallssignalfolge selbst ist.

Bei dem erfindungsgemäßen Verfahren können die Abschnitte der Referenz-Pseudozufallssignalfolge in ihrer Länge relativ frei bemessen sein, also auch unterschiedliche Längen aufweisen, weil dies bei der Auswertung ohne weiteres entsprechend berücksichtigt werden kann. Als besonders vorteilhaft wird es zur Erzielung einer möglichst einfachen Durchführbarkeit des erfindungsgemäßen Verfahrens allerdings angesehen, wenn aufeinanderfolgende Abschnitte jeweils etwa derselben Länge der Referenz-Pseudozufallssignalfolge mit der empfangenen Pseudozufallssignalfolge kreuzkorreliert werden.

Mit dem erfindungsgemäßen Verfahren ist es mit vergleichsweise geringem Zusatzaufwand auch möglich, die Bitfehler in der empfangenen Pseudozufallssignalfolge zu ermitteln, indem die Höhe der Maxima ausgewertet wird und ein den Bitfehler angebendes Signal erzeugt wird. Für sich ist diese Verfahrensausfuhrung bekannt; es wird dazu auf die DE 40 12 850 A1 verwiesen.

Das erfindungsgemäße Verfahren ermöglicht in einer vorteilhaften Ausgestaltung das sichere Erkennen eines auf der zu überwachenden digitalen Übertragungsstrecke aufgetretenen Bitslip, der als ein Phasensprung der Pseudozufallssignalfolge verstanden werden kann, wenn die Maxima der Summen-Kreuzkorrelationsfunktion hinsichtlich ihres zeitlichen Auftretens auf eine Verschiebung eines Maximums um eine vorgegebene Zeitspanne überwacht werden und beim Feststellen der vorgegebenen Zeitspanne ein einen Bitslip kennzeichnendes Meldesignal erzeugt wird.

Zuverlässige Meßergebnisse lassen sich mit dem erfindungsgemäßen Verfahren nur dann erzielen, wenn es selbst frei von Systemfehlern arbeitet. Um diesbezüglich eine Überwachung vorzunehmen, werden die Summen-Kreuzkorrelationsfunktion hinsichtlich der Reihenfolge des Auftretens der Maxima entsprechend den aufeinanderfolgenden Abschnitten der Referenz-Pseudozufallssignalfolge überwacht wird, und es wird beim Feststellen einer Störung der Reihenfolge ein einen Systemfehler bezeichnendes Alarmsignal erzeugt.

Zur Erläuterung der Erfindung ist in
Figur 1 in Form eines nur die prinzipielle Wirkungsweise veranschaulichenden Blockschaltbildes eine Anordnung zur Durchführung des erfindungsgemäßen Verfahrens, in
Figur 2 ein Verlauf einer partiellen Kreuzkorrelationsfunktion, in
Figur 3 das zeitliche Auftreten von Maxima in einer aus den partiellen Kreuzkorrelationsfunktionen gebildeten Summen-Kreuzkorrelationsfunktion und in
Figuren 4A und 4B eine Ausführung der Meßeinrichtung der Anordnung nach Figur 1 dargestellt.

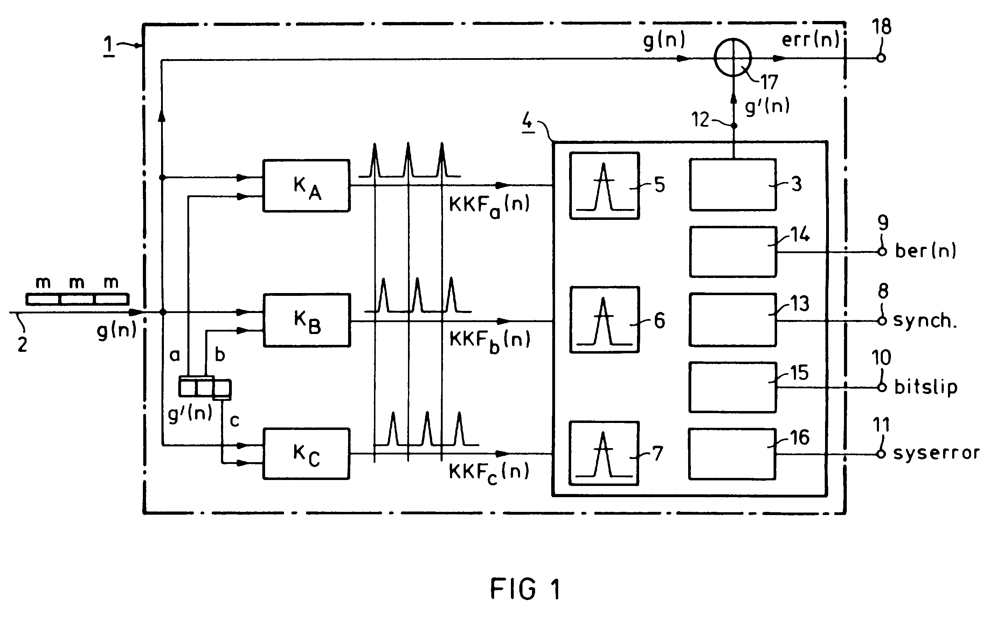

Gemäß der Figur 1 ist ein Empfänger 1 am Ende einer digitalen Übertragungsstrecke 2 angeschlossen; der am nicht dargestellten Anfang der Übertragungsstrecke 2 angeordnete Sender kann beispielsweise so ausgeführt sein, wie es in der obenerwähnten DE 23 59 716 C3 beschrieben ist. Über die digitale Übertragungsstrecke 2 wird zum Zwecke der Überprüfung der Übertragungseigenschaften eine Pseudozufallssignalfolge g(n) übertragen, die vorzugsweise aus m-Sequenzen besteht. Eine entsprechende Referenz-Pseudozufallssignalfolge g'(n) wird in einem Generator 3 in einer Meßeinrichtung 4 des Empfängers 1 empfangsseitig erzeugt, bei dem es sich ebenfalls um ein rückgekoppeltes Schieberegister handeln kann. Jede Referenz-Pseudozufallssignalfolge g'(n) des Generators 3 ist im dargestellten Ausführungsbeispiel drei Korrelatoren K_{A}, K_{B} und K_{C} eingangsseitig so zugeführt, daß ein Eingang des Korrelators K_{A} mit einem ersten Abschnitt a der Folge g'(n), ein Eingang des Korrelators K_{B} mit dem nachfolgenden Abschnitt b und der Korrelator K_{C} mit dem sich anschließenden Abschnitt c derselben Folge g'(n) beaufschlagt wird; außerdem ist weiteren Eingängen der Korrelatoren K_{A} bis K_{C} eingangsseitig die Pseudozufallssignalfolge g(n) zugeführt.

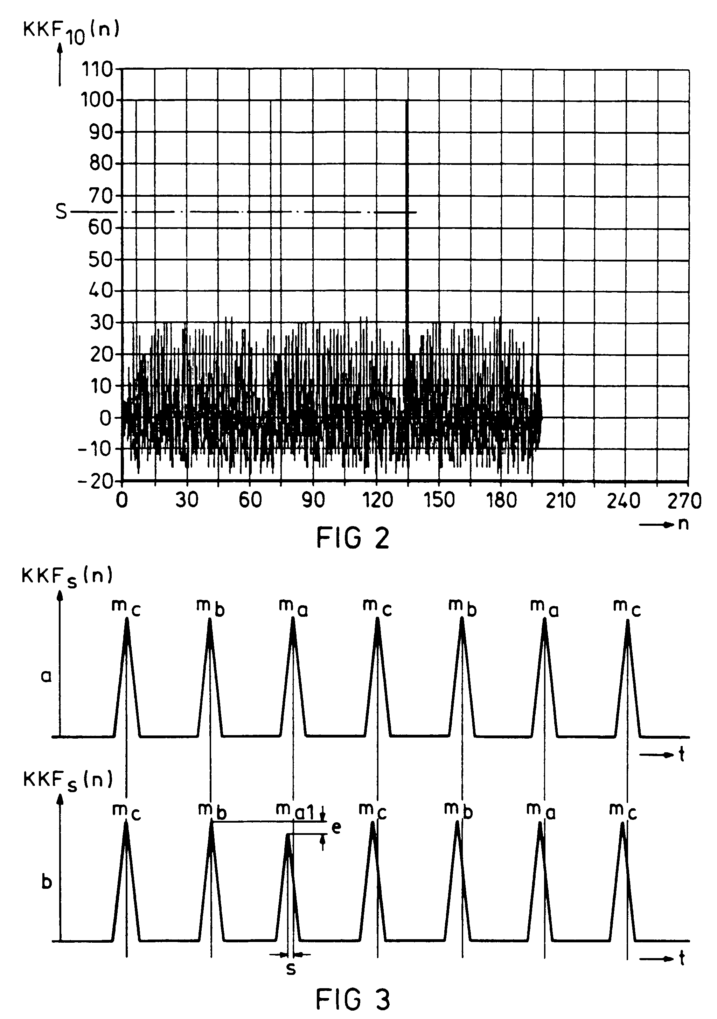

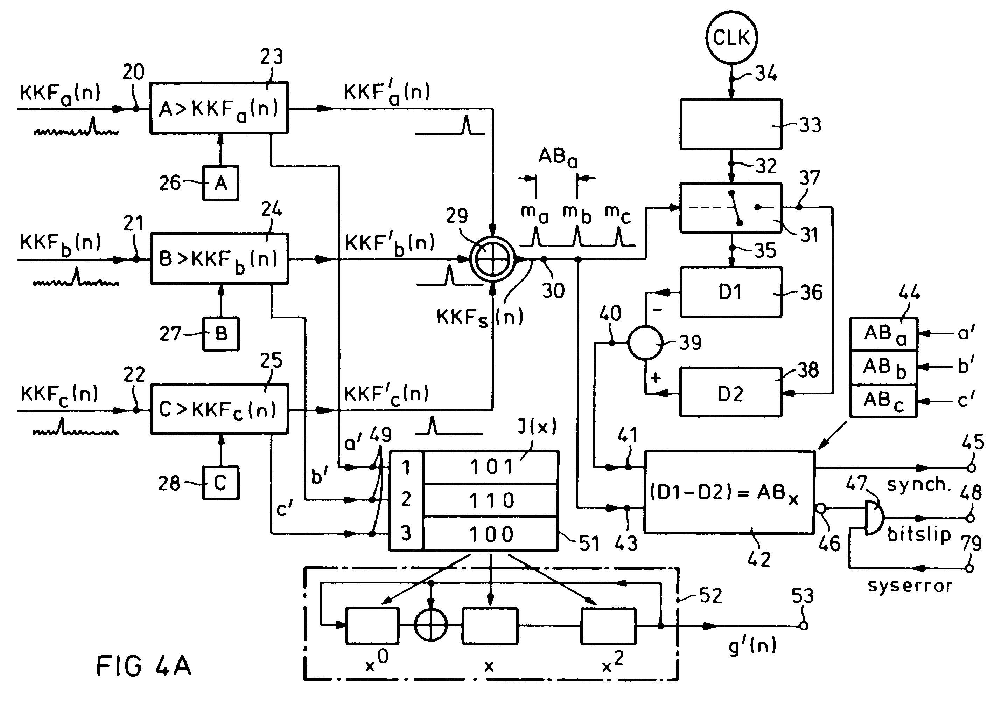

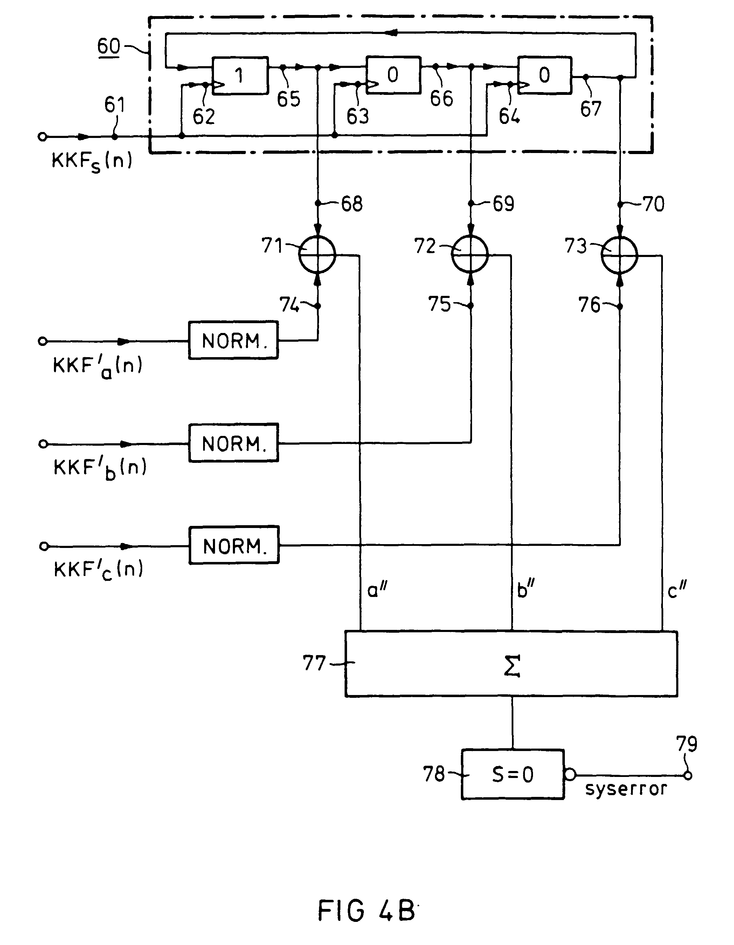

Wie in der Figur 1 schematisch dargestellt, ist bei dem gezeigten Beispiel jede Referenz-Pseudozufallssignalfolge g'(n) in Abschnitte gleicher Länge unterteilt; dies muß aber nicht zwangsweise so sein. In den Korrelatoren K_{A} bis K_{C} erfolgt somit eine partielle Kreuzkorrelation, so daß sich am Ausgang der Korrelatoren K_{A} bis K_{C} partielle Kreuzkorrelationsfunktionen KKFₐ(n), KKF_{b}(n) und KKF_{c}(n) bilden. Diese partiellen Kreuzkorrelationsfunktionen werden nach einer Schwellwertuntersuchung mittels der Schwellwertdetektoren 5, 6 und 7 addiert, so daß zur weiteren Auswertung eine Summen-Kreuzkorrelationsfunktion KKF_{S}(n) zur Verfügung steht, wie sie im oberen Diagramm a der Fig. 3 dargestellt ist. In diesem Diagramm bezeichnen mₐ, m_{b} und m_{c} die Maxima, die bei der Kreuzkorrelation mit den entsprechenden Abschnitten a, b und c jeder Pseudozufallssignalfolge g'(n) gebildet werden. Ein Nichtauftreten von Signalen am Ausgang 8 wird als Ausfall der Synchronisation interpretiert. Wie anhand der Figuren 2, 3, 4A und 4B, insbesondere der Figuren 4A und 4B, unten noch eingehend erläutert wird, ergibt sich bei der Auswertung am Ausgang 9 der Meßeinrichtung 4 ein Signal ber(n), das die Anzahl der Bitfehler angibt, am Ausgang 10 ein einen aufgetretenen Bitslip kennzeichnendes Signal bitslip und am Ausgang 11 ein einen Systemfehler kennzeichnendes Signal syserror; an einem weiteren Ausgang 12 entsteht das (zwangssynchronisierte) Signal g'(n).

Die Summen-Kreuzkorrelationsfunktion KKFₛ(n) wird (im Block 13 der Meßeinrichtung 4) untersucht, ob ihre Maxima mₐ, m_{b} und m_{c} in den erwarteten zeitlichen Abständen auftreten (bei einer Bildung der partiellen Kreuzkorrelationsfunktionen mit gleichlangen Abschnitten a, b und c der Referenz-Pseudozufallssignalfolge g'(n) in äquidistanten Abständen!). Ist dies der Fall, dann treten am Ausgang 8 des Blockes 13 Signale auf, die eine bestehende Synchronisation kennzeichnen.

Ferner wird - wie oben bereits kurz angedeutet wurde - in der Meßeinrichtung 4 eine Auswertung im Block 15 dahingehend vorgenommen, ob als Fehler auf der digitalen Übertragungsstrecke ein Bitslip aufgetreten ist, der als Phasensprung der empfangenen Pseudozufallssignalfolge aufgefaßt werden kann. Das Diagramm b der Fig. 3 zeigt die Auswirkung eines solchen Fehlers auf die Summen-Kreuzkorrelationsfunktion KKFₛ(n); das Maximum mₐ₁ ist aufgrund eines Bitslip um eine Zeitspanne s früher als erwartet aufgetreten. Dies wird zum Erkennen des Bitslip ausgenutzt und dementsprechend ein Signal am Ausgang 10 erzeugt.

Ferner wird in einem Block 16 in der Meßeinrichtung 4 eine Prüfung daraufhin vorgenommen, ob das Verfahren der partiellen Kreuzkorrelation sich selbst im fehlerfreien Zustand befindet. Dazu wird überprüft, ob die Maxima der Summen-Kreuzkorrelationsfunktion KKFₛ(n) in der vorgegebenen Reihenfolge aufeinanderfolgen. Ist dies nicht der Fall, dann liegt ein Fehler im System vor, der durch ein Signal syserror am Ausgang 11 signalisiert wird.

Aus Fig. 1 ist ferner ersichtlich, daß die im Generator 3 erzeugte Referenz-Pseudozufallssignalfolge g'(n) in einem Logik-Glied 17 mit der empfangenen Pseudozufallssignalfolge g(n) verknüpft wird, um an einem Ausgang 18 eine Bitfehlerfunktion err(n) zu gewinnen, wie sie beispielsweise in der DE 41 21 480 C1 beschrieben ist.

In Figur 2 ist der Zeitverlauf einer partiellen Kreuzkorrelationsfunktion KKF₁₀(n) über der Größe n in dem Falle wiedergegeben, in dem 10 Abschnitte der Referenz-Pseudozufallssignalfolge g'(n) als 2ⁿ-m-Sequenz jeweils für sich mit der empfangenen Pseudozufallssignalfolge kreuzkorreliert werden. Daraus ist erkennbar, daß das erste Maximum bereits bei n = 60 auftritt; entsprechend früh treten die Maxima der anderen Abschnitte auf, so daß schnell festgestellt werden kann, ob ein Ausfall der Synchronisation stattgefunden hat oder nicht.

In Figur 2 ist auch die Höhe des Schwellwertes bei etwa 65 eingetragen, weil durch diesen Schwellwert eine Unterscheidung zwischen tatsächlichen Maxima der partiellen Kreuzkorrelationsfunktion und den Nebenmaxima dieser Funktion getroffen werden muß.

Die Figur 4A der beiden ein Ausführungsbeispiel der Meßeinrichtung 4 gemäß Figur 1 wiedergebenden Figuren 4A und 4B läßt zunächst erkennen, daß die partiellen Kreuzkorrelationsfunktionen KKFₐ(n), KKF_{b}(n) und KKF_{c}(n) Eingängen 20, 21 und 22 von Schwellwertdetektoren 23, 24 und 25 zugeführt werden, die den Detektoren 5 bis 7 nach Fig. 1 entsprechen. Jedem der Schwellwertdetektoren 23 bis 25 ist ein Schwellwertgeber 26, 27 und 28 zugeordnet, so daß jede der partiellen Kreuzkorrelationsfunktionen ggf. individuell hinsichtlich eines vorgebbaren Schwellwertes A, B oder C überwacht werden kann.

Ermitteln die Schwellwertdetektoren 23 bis 25 Maxima in den partiellen Kreuzkorrelationsfunktionen KKFₐ(n), KKF_{b}(n) und KKF_{c} (n),die oberhalb der vorgegebenen Schwellwerte A bis C liegen, dann treten an den Ausgängen der Schwellwertdetektoren 23 bis 25 partielle Kreuzkorrelationsfunktionen KKF'ₐ(n), KKF'_{b}(n) und KKF'_{c}(n) auf, die nur noch das festgestellte Maximum beinhalten. Diese partiellen Kreuzkorrelationsfunktionen werden in einem Summierer 29 addiert, so daß an dessen Ausgang 30 eine Summen-Kreuzkorrelationsfunktion KKF_{S}(n) auftritt. Diese Summen-Kreuzkorrelationsfunktion enthält demzufolge die Maxima der verschiedenen partiellen Kreuzkorrelationsfunktionen in der Reihenfolgen, in der sie zeitlich aufgetreten sind.

Die Summen-Kreuzkorrelationsfunktion KKFₛ(n) wird als Steuersignal einem Schaltglied 31 zugeführt, das mit einem Eingang 32 an einen Zähler 33 angeschlossen ist, der ständig läuft. Dieser Zähler 33 ist mit dem Taktsignal 34 des Gesamtsystems beaufschlagt. An einen Ausgang 35 des Schaltgliedes 31 ist ein Datenregister 36 angeschlossen. Ein weiterer Ausgang 37 des Schaltgliedes 31 ist mit einem weiteren Datenregister 38 verbunden. Die Ausgänge der Datenregister 36 und 38 sind mit einem Differenzbildner 39 verbunden, dessen Ausgang 40 mit einem Eingang 41 eines Komparators 42 verbunden ist. Ein Steuereingang 43 des Komparators 42 ist unmittelbar mit dem Ausgang 30 des Summierers 29 verbunden. Dem Komparator 42 ist ein Speicher 44 zugeordnet, aus dem in später noch zu erläuternder Weise Vergleichswerte in den Komparator 42 geladen werden. An einem Ausgang 45 ist dann das Signal "synch" mit dem Wert "0" abgreifbar, wenn Synchronismus gegeben ist. Bei einem Signal "synch" mit dem Wert "1" ist ein Ausfall der Synchronisation eingetreten. Ein weiterer (negierender) Ausgang 46 des Komparators ist über ein UND-Glied 47 mit einem weiteren Ausgang 48 verbunden; am Ausgang 48 wird ein Meldesignal "bitslip" angezeigt, das beim Auftreten eines Bitslip den Wert "0" aufweist. Dazu ist das UND-Glied 47 auch mit dem Alarmsignal "syserror" beaufschlagt, das einen Fehler im System anzeigt.

Der Figur 4A ist ferner zu entnehmen, daß den Schwellwertdetektoren 23 bis 25 normierte Signale a',b' und c' entnommen werden, die dann den Wert "1" annehmen, wenn die Schwellwertdetektoren 23 bis 25 ansprechen. Die Signale a', b' und c' werden Adress-Eingängen 49 eines Speichers 51 zugeführt, der den aus der Figur 4A ersichtlichen Speicherinhalt an den verschiedenen Adressen aufweist. Die Speicherinhalte werden - wie dies ebenfalls die Figur 4A zeigt - in die verschiedenen Stufen eines Schieberegisters 52 geladen, das daraufhin an seinem Ausgang 53 die Referenz-Pseudozufallssignalfolge g'(n) abgibt. Der Ausgang 53 nach der Figur 4A ist mit dem Ausgang 12 nach Figur 1 identisch.

Zur Ermittlung eines Systemfehlers "syserror" dient der in Figur 4B dargestellte Schaltungsteil, der u. a. ein weiteres Schieberegister 60 enthält. Diesem Schieberegister wird über eine Anschlußleitung 61 die Summen-Kreuzkorrelationsfunktion KKF_{S}(n) als Taktsignal zugeführt, indem diese Leitung 61 mit jeweils einem Eingang 62, 63 und 64 der einzelnen Stufen des weiteren Schieberegisters 60 verbunden ist. In dem weiteren Schieberegister 60 wird durch das Taktsignal eine "1" zur jeweils nächstliegenden Stufe durchgeschoben.

Die Ausgänge 65, 66 und 67 der einzelnen Stufen des weiteren Schieberegisters 60 sind mit Eingängen 68, 69 und 70 jeweils eines Exklusiv-Oder-Gliedes 71, 72 und 73 verbunden; an den anderen Eingängen 74, 75 und 76 der Exklusiv-Oder-Glieder 71 bis 73 liegt in jeweils normierter Form eine partielle Kreuzkorrelationsfunktion KKF'ₐ(n), KKF'_{b}(n) oder KKF'_{c}(n). Normiert bedeutet in diesem Fall, daß die partiellen Kreuzkorrelationsfunktionen das Signal "1" liefern, wenn sie ein Maximum aufweisen, dagegen den Wert "0" annehmen, wenn ein solches Maximum nicht vorhanden ist. Ausgangsseitig sind die Exklusiv-Oder-Glieder 71 bis 73 mit einem Quersummenbildner 77 verbunden, in dem die Quersumme der Ausgangssignale a", b" und c" der Exklusiv-Oder-Glieder 71 bis 73 gebildet wird. Die Höhe der Quersumme wird in einem nachgeordneten Baustein 78 daraufhin untersucht, ob sie den Wert 0 aufweist. Ist dies der Fall, dann liegt ein Fehler im System nicht vor, und am Ausgang 79 steht infolge Negation ein entsprechendes Signal "1" an.

Die Anordnung nach den Figuren 4A und 4B arbeitet in der Weise, daß die partiellen Kreuzkorrelationsfunktionen KKFₐ(n) bis und KKF_{c}(n) in den Schwellwertdetektoren 23 bis 25 darauf untersucht werden, ob sie jeweils ein ausgeprägtes Maximum aufweisen. Ist dies der Fall, dann werden entsprechend bewertete partielle Kreuzkorrelationsfunktionen KKF'ₐ(n) bis und KKF'_{c}(n) gebildet, die jeweils nur einen Maximalwert beinhalten. In dem Summierer 29 werden diese bewerteten Funktionen addiert, so daß die Summen-Kreuzkorrelationsfunktion KKF_{S}(n) Maxima mₐ, m_{b} und m_{c} in jeweils zeitlichen Abständen voneinander aufweist, die der jeweiligen Abschnittslänge entsprechen, die zur Bildung der partiellen Kreuzkorrelationsfunktionen aus der Referenz-Pseudozufallssignalfolge g'(n) verwendet worden sind. Über den Schalter 31 werden durch die Maxima mₐ, m_{b} und m_{c} gesteuerte Taktimpulse in das Datenregister 36 übernommen, beispielsweise durch das Maximum mₐ der Schalter 31 so gesteuert, daß das Datenregister 36 beaufschlagt wird. Beim Auftreten des nächsten Maximums m_{b} wird das weitere Datenregister 38 mit Taktimpulsen beaufschlagt, so daß am Ausgang 40 des Differenzbildners 39 eine Größe entsteht, die der Differenz der Zählerstände der Datenregister 36 und 38 entspricht.

In dem Komparator 42 wird diese Differenz der Zählerstände mit einem vorgegebenen Wert AB_{b} verglichen, der bei dieser Folge von Maxima der Summen-Kreuzkorrelationsfunktion KKFₛ(n) von dem Speicher 44 in den Komparator 42 geladen worden ist. Entspricht die Differenz der Zählerstände dem in den Komparator 42 geladenen Wert AB_{b} und ergibt sich entsprechendes hinsichtlich des zeitlichen Abstandes der Maxima m_{b} und m_{c} in bezug auf die Größe AB_{c} des Speichers 44, dann ist eine Synchronisation zwischen der empfangenen Pseudozufallssignalfolge g(n) und der Referenz-Pseudozufallssignalfolge g'(n) gegeben und es tritt am Ausgang 45 das Signal "synch" mit dem Wert "0" auf. Andernfalls hat dieses Signal den Wert "1", woraus auf einen Ausfall der Synchronisation geschlossen wird.

Zum Ermitteln des Bitslip wird beim Auftreten eines Signals bitslip mit dem Wert "0" in nicht dargestellter Weise überprüft, ob dieses Signal kurze Zeit ansteht; daraus wird auf einen Bitslip geschlossen.

## Patentansprüche

1. Verfahren zum Gewinnen eines einen Ausfall der Synchronisation zwischen einer Pseudozufallssignalfolge eines Senders und einer Referenz-Pseudozufallssignalfolge eines Empfängers anzeigenden Signals mittels einer empfangerseitigen Meßeinrichtung,
**dadurch gekennzeichnet,** daß
a) aufeinanderfolgende Abschnitte (a,b,c) der Referenz-Pseudozufallssignalfolge (g'(n)) jeweils für sich nacheinander mit der empfangenen Pseudozufallssignalfolge (g(n)) unter Gewinnen partieller Kreuzkorrelationsfunktionen (KKFₐ(n), KKF_{b}(n) und KKF_{c}(n)) kreuzkorreliert werden,
b) die partiellen Kreuzkorrelationsfunktionen (KKFₐ(n), KKF_{b}(n) und KKF_{c}(n)) unter Erzeugen einer Summen-Kreuzkorrelationsfunktion (KKFₛ(n)) addiert werden,
c) die Maxima (mₐ, m_{b} und m_{c}) der Summen-Kreuzkorrelationsfunktion (KKFₛ(n)) erfaßt und auf ihr zeitliches Auftreten überwacht werden und
d) beim nicht zeitgerechten Auftreten mindestens dreier Maxima (mₐ, m_{b} und m_{c}) in der Summen-Kreuzkorrelationsfunktion (KKFₛ(n)) das den Ausfall der Synchronisation anzeigende Signal (synch) erzeugt wird.

2. Verfahren nach Anspruch 1,
**dadurch gekennzeichnet,** daß
e) aufeinanderfolgende Abschnitte (a,b,c) jeweils etwa derselben Länge der Referenz-Pseudozufallssignalfolge (g'(n)) mit der empfangenen Pseudozufallssignalfolge (g(n)) kreuzkorreliert werden.

3. Verfahren nach Anspruch 1 oder 2,
**dadurch gekennzeichnet,** daß
f) die Höhe der Maxima (mₐ, m_{b} und m_{c}) ausgewertet wird und ein den Bitfehler angebendes Signal (ber(n)) erzeugt wird.

4. Verfahren nach einem der vorangehenden Ansprüche,
**dadurch gekennzeichnet,** daß
g) die Maxima (mₐ, m_{b} und m_{c}) der Summen-Kreuzkorrelationsfunktion (KKFₛ(n)) hinsichtlich ihres zeitlichen Auftretens auf eine Verschiebung eines Maximums (z.B. m_{b}) um eine vorgegebene Zeitspanne (s) überwacht werden und
h) beim Feststellen der vorgegebenen Zeitspanne (s) ein einen Bitslip kennzeichnendes Meldesignal (bitslip) erzeugt wird.

5. Verfahren nach einem der vorangehenden Ansprüche,
**dadurch gekennzeichnet,** daß
i) die Summen-Kreuzkorrelationsfunktion (KKFₛ(n)) hinsichtlich der Reihenfolge des Auftretens der Maxima (mₐ, m_{b} und m_{c}) entsprechend den aufeinanderfolgenden Abschnitten (a,b,c) der Referenz-Pseudozufallssignalfolge (g'(n)) überwacht wird und
j) beim Feststellen einer Störung der Reihenfolge ein einen Systemfehler bezeichnendes Alarmsignal (syserror) erzeugt wird.

## Claims

1. A process for obtaining a signal indicating a synchronisation error between a pseudo-random signal sequence from a transmitter and a reference pseudo-random signal sequence from a receiver by means of a measuring device on the receiver side
characterized in that
a) successive sections (a,b,c) of said reference pseudo-random signal sequence (g'(n)) are each individually cross-correlated one after the other with the received pseudo-random signal sequence (g(n)), thus obtaining partial cross-correlation functions (KKFₐ(n), KKF_{b}(n), KKF_{c}(n)),
b) said partial cross-correlation functions (KKFₐ(n), KKF_{b}(n) and KKF_{c}(n)) are added to generate a sum-cross-correlation function (KKFₛ(n)),
c) the maxima (mₐ, m_{b} and m_{c}) of said sum-cross-correlation function (KKFₛ(n)) are detected and monitored for their occurrence in time, and
d) if at least three maxima (mₐ, m_{b} and m_{c}) do not occur timely in said sum-cross-correlation function (KKFₛ(n)), the signal (synch) indicating the synchronisation error will be generated.

2. The process as claimed in claim 1
characterized in that
e) successive sections (a,b,c) each of approximately the same length as said reference pseudo-random signal sequence (g'(n)) are cross-correlated with the received pseudo-random signal sequence (g(n)).

3. The process as claimed in claims 1 or 2
characterized in that
f) the heights of said maxima (mₐ, m_{b} and m_{c}) are evaluated and a signal (ber(n)) indicating the bit error is generated.

4. The process as claimed in one of the preceding claims
characterized in that
g) said maxima (mₐ, m_{b} and m_{c}) of said sum-cross-correlation function (KKFₛ(n)) are monitored, with respect to their occurrence in time, for a shift of a maximum (e.g. m_{b}) by a predetermined time span (s), and
h) upon detection of said predetermined time span (s), a notification signal (bitslip) indicating a bitslip will be generated.

5. The process as claimed in one of the preceding claims
characterized in that
i) said sum-cross-correlation function (KKFₛ(n)) is monitored for the order of occurrence of said maxima (mₐ, m_{b} and m_{c}) corresponding to the successive sections (a,b,c) of said reference pseudo-random signal sequence (g'(n)), and
j) upon detection of an error in said order, an alert signal (syserror) indicating a system error will be generated.

## Revendications

1. Procédé permettant d'obtenir un signal indiquant une erreur de synchronisation entre une séquence de signaux pseudo-aléatoires d'un émetteur et une séquence de signaux pseudo-aléatoires de référence d'un récepteur au moyen d'un dispositif de mesure côté récepteur,
**caractérisé en ce que**
a) des intervalles (a, b, c) se succédant de la séquence de signaux pseudo-aléatoires de référence (g' (n)) sont corrélés chacun l'un après l'autre avec la séquence de signaux pseudo-aléatoires reçue (g (n)) pour obtenir des fonctions de corrélation croisée partielles (KKFₐ(n), KKF_{b}(n) et KKF_{c}(n)),
b) les fonctions de corrélation croisée (KKFₐ(n), KKF_{b}(n) et KKF_{c}(n)) sont additionnées pour donner une fonction somme de corrélation croisée (KKFₛ(n)),
c) les maxima (mₐ, m_{b} et m_{c}) de la fonction somme de corrélation croisée (KKFₛ(n)) sont captés et contrôlés par rapport à leur apparition dans le temps et
d) le signal indiquant une erreur de synchronisation (synch) est créé si l'apparition d'au moins trois maxima (mₐ, m_{b} et m_{c}) de la fonction somme de corrélation croisée (KKFₛ(n)) n'est temporairement pas correcte.

2. Procédé suivant la revendication 1,
**caractérisé en ce que**
e) des intervalles (a, b, c) de longueurs relativement égales se succédant de la séquence de signaux peudo-aléatoires de référence (g' (n)) sont corrélés par corrélation croisée avec la séquence de signaux pseudo-aléatoires reçue (g (n)).

3. Procédé suivant la revendication 1 ou 2,
**caractérisé en ce que**
f) l'amplitude des maxima (mₐ, m_{b} et m_{c}) est évaluée et en ce qu'un signal (ber (n)) indiquant l'erreur sur les bits est créé.

4. Procédé suivant l'une des revendications précédentes,
**caractérisé en ce que**
g) les maxima (mₐ, m_{b} et m_{c}) de la fonction somme de corrélation croisée (KKFₛ(n)) sont contrôlés en fonction de leur apparition temporelle pour vérifier l'apparition d'un décalage d'un maximum (par ex. m_{b}) d'un intervalle de temps (s) défini et
h) un signal d'avertissement (bitslip) indiquant un bitslip est créé lorsque l'intervalle de temps défini (s) est observé.

5. Procédé suivant l'une des revendications précédentes,
**caractérisé en ce que**
i) la fonction somme de corrélation croisée (KKFₛ(n)) est contrôlée en fonction de la suite d'apparitions des maxima (mₐ, m_{b} et m_{c}) par rapport aux intervalles (a, b, c) se succédant de la séquence de signaux pseudo-aléatoires de référence (g' (n)) et
j) un signal d'alarme (syserror) indiquant une erreur de système est créé lorsqu'une altération de la suite est observée.
